# EUROPEAN PATENT APPLICATION

(11) **EP 4 485 249 A1**
(43) Date of publication of application: **01.01.2025**
(21) Application number: 24183707.9
(22) Date of filing: 21.06.2024
(51) Int. Cl.: G06F 21/55, G06F 21/57

(54) **LARGE LANGUAGE MODELS FOR ACTOR ATTRIBUTIONS**

(30) Priority: 30.06.2023 US 202363524351 P; 28.09.2023 US 202318477241
(71) Applicant: CrowdStrike, Inc., Sunnyvale, CA 94086 (US)
(72) Inventor: SOUTHGATE, Andrew, Sunnyvale, 94086 (US); SUMEDREA, Paul, Sunnyvale, 94086 (US); COCEA, Stefan-Bogdan, Sunnyvale, 94086 (US); CORLATESCU, Dragos Georgian, Sunnyvale, 94086 (US)
(74) Representative: Murgitroyd & Company

(57) **Abstract**

Systems and methods of actor attribution utilizing a machine learning (ML) model, such as a large language model (LLM), are provided. The method includes generating a first ML model based on first data associated with a first cybersecurity incident of a plurality of cybersecurity incidents. The method includes training the first ML model based on actor attribution associated with the first cybersecurity incident to generate a second ML model. The method includes receiving second data that is associated with a second cybersecurity incident of the plurality of cybersecurity incidents. The method includes producing, by a processing device for the second ML model using the second data, an attribution of the second cybersecurity incident to an actor.

## Description

### CROSS REFERENCE TO RELATED APPLICATION

This application claims the benefit of and priority to U.S. Provisional Application No. 63/524,351, entitled "LARGE LANGUAGE MODELS FOR ACTOR ATTRIBUTION" and filed on June 30, 2023, which is expressly incorporated by reference herein in its entirety.

### TECHNICAL FIELD

Aspects of the present disclosure relate to machine learning (ML) models, and more particularly, to large language models (LLMs) used to attribute cybersecurity events to particular actors.

### BACKGROUND

Large language models are designed to understand and generate coherent and contextually relevant text. Large language models are typically built using deep learning techniques using a neural network architecture and are trained on substantial amounts of text data for learning to generate responses. The training process for large language models involves exposing the model to vast quantities of text from various sources, such as books, articles, websites, and other data.

Large language models use tokens as fundamental units into which text is divided for processing. Tokens are usually smaller units of text, such as individual characters, sub words (e.g., byte-pair encoding), or words. Large language models tokenize queries and general text documentation as part of its input processing, which enables large language models to manage large volumes of general text documentation efficiently. By breaking the text into tokens and representing text numerically, large language models can understand and generate responses based on the underlying patterns and relationships within the text.

### SUMMARY

Accordingly there is provided a method as detailed in claim 1. Advantageous features are provided in the dependent claims. A system and a computer program are also provided.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system for training an attack attribution model, in accordance with some embodiments of the present disclosure.
FIG. 2 is a block diagram that illustrates an example system for utilizing an actor attribution LLM, in accordance with some embodiments of the present disclosure.
FIG. 3 is a flow diagram of a method for actor attribution utilizing an ML model, such as an LLM, in accordance with some embodiments of the present disclosure.
FIG. 4 is a component diagram of an example of a device architecture for outputting an actor attribution, in accordance with embodiments of the disclosure.
FIG. 5 is a block diagram of an example computing device that may perform one or more of the operations described herein, in accordance with some embodiments of the disclosure.

### DETAILED DESCRIPTION

As discussed above, a large language model (LLM) tokenizes queries and general text documentation as part of its input processing to facilitate efficient processing and analysis. In some embodiments, an LLM may be able to recognize synonyms in text based on prior processing. As described herein, the properties associated with LLMs may be leveraged to assist in cybersecurity analysis and, more particularly, to attributing malware to a specific actor. Cybersecurity analysis includes activities utilized to identify and/or analyze computer-based attacks, which may include malware.

Malware is a term that refers to malicious software. Malware includes software that is designed with malicious intent to cause intentional harm and/or bypass security measures. Malware is used, for example, by cyber attackers to disrupt computer operations, to access and to steal sensitive information stored on the computer or provided to the computer by a user, or to perform other actions that are harmful to the computer and/or to the user of the computer. Malware may be formatted as executable files (e.g., EXE files), dynamic link libraries (DLLs), scripts, steganographic encodings within media files, such as images, and/or other types of computer programs, or combinations thereof.

To defeat malware, analysts may review a computer infrastructure and/or networking to identify potential security risks and/or malicious software. Once identified, the analyst may attempt to remove any malware and/or repair any damage done to the infrastructure. In some cases, it may be helpful to attribute a particular actor to a given attack, as some actors implement particular techniques, and knowledge of these techniques may aid in identifying the extent of the attack and/or potential remediation options. As used herein, an actor refers to at least a portion of a computer system (e.g., a program) associated with an operator (e.g., programmer, hacker, etc.) that is a source of a malware attack. For example, a particular programmer (or hacker) may provide commands for the actor to initiate and/or perpetuate a cybersecurity incident. In some embodiments, an actor may refer to a particular computer system involved in a cybersecurity incident (e.g., artificial intelligence (AI) directing an attack), and attributing the cybersecurity incident to the actor may include associating the cybersecurity incident with the physical computing device and/or instructions executing on the physical computing device.

Attributing an actor to a particular attack based on various detections relies on previous cases in which the attacker (i.e., the actor) exhibited the same behavior either in part or in its entirety. In some cases, this attribution exercise may be spread out across multiple analysts who work on different cases, but which may link to the same attacker. Without intricate knowledge about previous cases, it may be difficult for an analyst or group of analysts to map particular activities back to the same attacker. At the same time, attackers operate at length outside a given computing environment in places such as the Dark Web where they attempt to sell their services or disclose credentials/confidential data in return for money. During a computer attack on a computer infrastructure, an attacker may exhibit a series of patterns through hands-on keyboard activity inside the computer infrastructure (which may be documented by monitoring and/or telemetry tools inside the infrastructure) as well as outside the computer infrastructure in the marketplace (such as in environments of the Dark Web, where the attacker use specific verbiage to interact with potential customers). All of this activity may represent a great amount of data that may be processed in order to attribute a particular set of behavior to a threat actor. This processing may utilize intricate knowledge of a particular attacker's past actions as well as specific verbiage used by the attacker (e.g., the way in which the attacker phrase sentences, particular codenames, stop word frequency, vocabulary, and the like). However, the amount of data, as well as the number of cybersecurity events that are to be analyzed to identify relationships, is so large that it may not be practically analyzed by a person.

The present disclosure addresses the above-noted and other deficiencies by providing a machine learning (ML) model, such as an LLM, configured to be trained on text previously attributed with high confidence to a particular actor and/or attacker. This text can come in the form of analyst notes documenting incidents observed in computer infrastructure or as text originating from conversations on public/private forums on the Dark Web. This data may be treated as a multiclass classification problem where a model and/or ensemble of models is trained in a supervised learning fashion. In some embodiments, the model may first be pre-trained on the data and then fine-tuned for the actor attribution task to generate an actor attribution model that is capable of predicting actor attribution based on input incident data.

As discussed herein, the present disclosure provides an approach that improves the operation of a computer system by increasing the speed at which cybersecurity events are analyzed, while using a reduced amount of resources. In addition, the present disclosure provides an improvement to the technological field of cybersecurity analysis by allowing for investigation validation utilizing the trained model. In some embodiments, the trained model may be prompted for analyzing a cybersecurity event, and the trained model may provide verification of the current analysis and/or suggest additional analysis that may be helpful in identifying a particular actor and/or attacker.

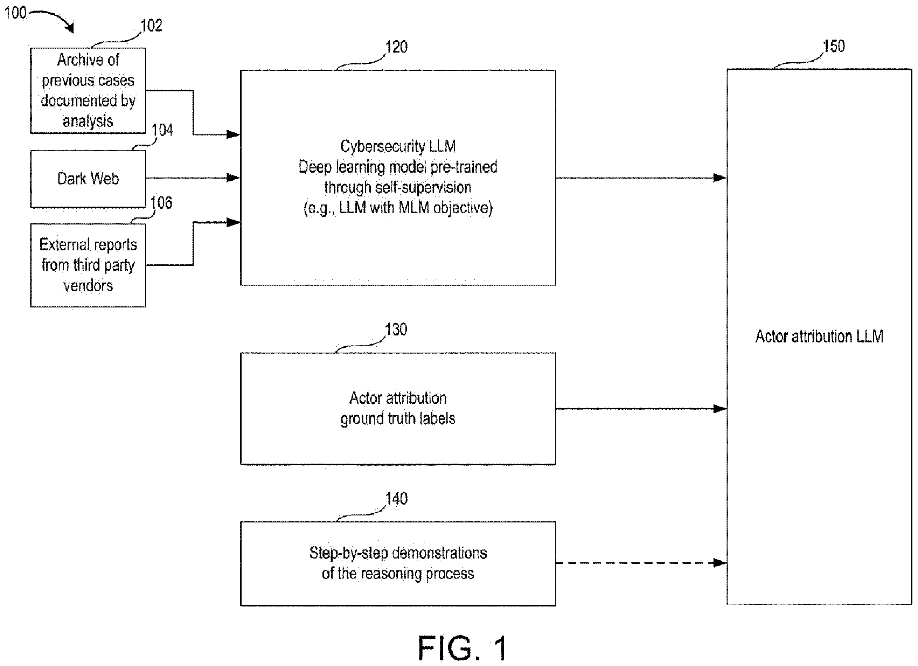

FIG. 1 is a block diagram that illustrates an example system 100 for training an attack attribution model, in accordance with some embodiments of the present disclosure. The system 100 uses one or more sources of data 102, 104, 106 to train a cybersecurity LLM 120. For example, a data archive 102, Dark Web activity 104, and external reports 106 may be provided to the cybersecurity LLM 120. Although this disclosure often refers to an LLM or LLMs, various other machine learning models may be used in addition to, or instead of, an LLM or LLMs.

The data archive 102 may include data associated with prior cases that have been documented by analysts. For example, the data archive 102, may include case notes, log files, detected executables, performance data, process information, system information, network information, and the like. While investigating a particular cybersecurity incident, a large amount of data may be collected. The data may include anything deemed relevant to the cybersecurity incident. For example, an analyst investigating the incident may keep notes of the investigation, and may collect information from affected systems in the infrastructure of the attack. Analysts providing the data to the data archive 102 may include threat intelligence analysts, threat hunters, and/or managed detection and response analysts/threat analysts. This information, which may include information on executing processes, executable images that may include malware, log data of affected systems network performance and/or packet information, and the like, may all be included as part of the data archive 102.

The Dark Web activity 104 may include information associated with a given incident that is collected from online activity. The Dark Web refers to a part of the World Wide Web that is primarily accessible by means of special software, allowing users and website operators to remain anonymous or untraceable. Because of its anonymity, the Dark Web is often used for illegal activities, including the exchange of information obtained in cybersecurity incidents. The Dark Web activity 104 that is collected for the cybersecurity LLM 120 may include information that is accessed from the Dark Web related to a particular cybersecurity incident. This may include online discussions of the incident, online offers to sell data associated with the incident, collections of data collected from the incident, and the like. While FIG. 1 references Dark Web activities, it will be understood that any type of online activity may be collected for inclusion in the cybersecurity LLM 120. In some embodiments, the Dark Web activity 104 may include data related to the way in which a particular attacker phrases sentences, particular codenames used in the data, stop word frequency, vocabulary, and the like.

The external reports 106 may include additional data that is available to the cybersecurity LLM 120 and related to a particular cybersecurity incident. For example, a blog post may be written that analyzes and/or provides commentary on a particular cybersecurity incident. In some embodiments, particular details about the steps of the attack may be created. For example, characteristics of attacks may be collected, with specific analysis on the techniques that are used. An example of such a collection of attacks is included at attack.mitre.org.

Once the one or more sources of data 102, 104, 106 are provided to the cybersecurity LLM 120, the cybersecurity LLM 120 may be trained (e.g., pre-trained based on a deep learning model) on the one or more sources of data 102, 104, 106 through self-supervision (for example by using masked language modelling (MLM) objective wit the LLM or any other form of objective function using either a masking technique or enforcing similarity between two views of the same type of text content). During the training process, the cybersecurity LLM 120 may learn to predict the next word in a sentence based on the context provided by the preceding word(s). For example, training using a masking technique may include masking particular words in the data, and training the cybersecurity LLM 120, based on the context of the data, to predict the masked text. This may be repeated multiple times until the cybersecurity LLM 120 is capable of predicting relationships between the text. This process enables the cybersecurity LLM 120 to develop a rich understanding of the relationships between words and the contextual nuances of language.

Once the cybersecurity LLM 120 is generated, it may be fine-tuned to generate an actor attribution LLM 150 that is capable of attributing a particular actor and/or attacker to a given cybersecurity incident. Once the cybersecurity LLM model 120 is (pre-)trained on one or more sources of data 102, 104, 106 and possess general knowledge around its structure, it can then be fine-tuned for the actor attribution task (through various parameter efficient means such as prompt tuning, adapters or matrix factorization inspired techniques such as low rank adaptation or quantization) using ground truth labels.

For example, actor attribute ground truth labels 130 may be included with the cybersecurity LLM 120 to generate the actor attribution LLM 150. The ground truth labels 130 may identify particular incidents where the actor and/or attacker involved is known with a high degree of probability/confidence. These ground truth labels 130 may be associated with the corresponding data (e.g., the one or more sources of data 102, 104, 106) for which the actor and/or attacker is known.

In addition, reasoning data 140 may be included with the cybersecurity LLM 120 to generate the actor attribution LLM 150. For example, the reasoning data 140 may include step-by-step demonstrations of the reasoning processing in identifying a particular actor and/or attacker with a particular cybersecurity incident. In some embodiments, the reasoning data 140 may include analysis steps that were utilized to research a particular cybersecurity incident, including investigation options and/or data collection.

Once generated, the actor attribution LLM 150 may be utilized in a production environment to perform actor attribution. The input to the actor attribution LLM 150 in production may include text or activities that analysts pre-filter and/or indicate as being suspicious. These observations can also come from an upstream machine learning (ML) model trained to perform anomaly detection, change point detection, or from a model trained in a supervised fashion for binary classification using labelled data including attacker-linked activity versus benign activity.

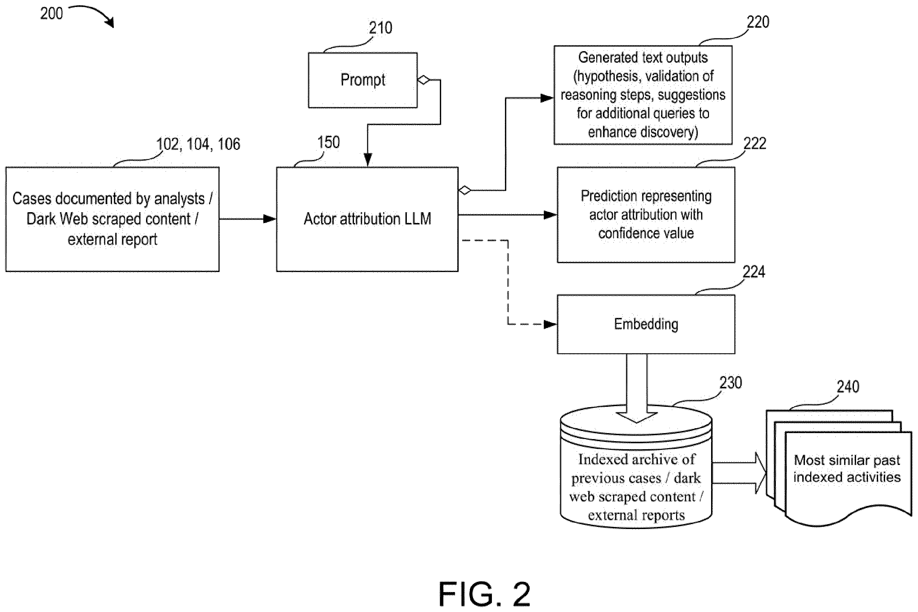

FIG. 2 is a block diagram that illustrates an example system 200 for utilizing an actor attribution LLM 150, in accordance with some embodiments of the present disclosure. A description of elements of FIG. 2 that have been previously described in FIG. 1 will be omitted for brevity. It should be appreciated that the cases documented by analysts, the Dark Web scraped content, and the external reports illustrated in FIG. 2 may correspond to the data archive 102, the Dark Web 104, and the external reports 106 from third party vendors in FIG. 1, respectively.

Referring to FIG. 2, the actor attribution LLM 150 may be generated, in part, based on one or more sources of data 102, 104, 106, as described herein and/or with respect to FIG. 1. The actor attribution LLM 150 may be configured to receive prompts 210 and generate one or more forms of output. The prompt 210 may include data and/or queries related to, for example, a cybersecurity incident, though the embodiments of the present disclosure are not limited thereto.

In some embodiments, in response to the prompt 210, the actor attribution LLM 150 may utilize generative functionality to generate text 220 analyzing the reasoning. The generated text 220 output by the LLM may provide hypotheses related to the incident, a validation of reasoning steps identified in the prompt 210 related to the incident, suggestions for additional queries that may enhance discovery related to the incident, and/or the like.

The generated text 220 may be utilized for analysts to validate their assumptions and/or brainstorming possible scenarios through the prompt 210. This feature may leverage the fact that validating the consistency of inputs (e.g., the prompt 210) can be easier than generating accurate factually correct explanations for actor attribution. Given an analyst report, and context around a threat actor, a prompt 210 can be designed for the actor attribution LLM 150 trained in a self-supervised fashion on previous cases such that the actor attribution LLM 150 can check for consistency in the reasoning of the analyst by leveraging the entire departmental knowledge included in the corpus upon which the actor attribution LLM 150 was trained. The actor attribution LLM 150 may be trained for this purpose by starting from the pre-trained cybersecurity LLM 120 and leveraging various instruction tuning techniques which aim to describe the reasoning behind a particular decision, thus steering the actor attribution LLM 150 through the decision making process, such as chain of thought or tree of thought prompting.

In some embodiments, in response to the prompt 210, the actor attribution LLM 150 may generate a prediction 222 that represents actor attribution. For example, the prediction 222 may predict a particular actor and/or attacker associated with the incident described by the prompt 210. In some embodiments, the prediction 222 may include a confidence value (e.g., a probability that the actor of the prediction 222 does, in fact, corresponds to the correct attacker). In some embodiments, this prediction 222 may also be multilabel, in which case the prediction may indicate that two actors might be cooperating with one another and sharing information with each other.

In some embodiments, in response to the prompt 210, the actor attribution LLM 150 may generate an embedding 224. The embedding 224 may be, or may include, a multi-dimensional vector representation of the prompt 210. The generated embedding 224 is not random/arbitrary but, instead, the points associated with the embedding 224 represented in the multi-dimensional space are close if the entities are similar and/or related to each other.

The embedding 224 for a given prompt 210 may be a numerical representation that encodes semantic and syntactic properties of the language represented by the prompt 210. The generated embeddings 224 may be high-dimensional vectors, where the dimensions capture different aspects of the language. The embeddings 224 produced by the actor attribution LLM 150 may have several desirable properties. First, the embeddings may capture semantic similarity, meaning that similar words or phrases are represented by vectors that are close to each other in the embedding space. For example, the embeddings of "dog" and "cat" would be closer together than the embeddings of "dog" and "car." This property allows for tasks like word similarity measurement or finding related words based on the vectors of the embedding 224.

Second, the embeddings 224 may capture contextual information. Since the actor attribution LLM 150 is trained on vast amounts of text, the actor attribution LLM 150 may programmatically learn to understand the meaning of words based on their surrounding context. This enables the embeddings 224 to reflect the meaning of a word within a specific sentence or document of the prompt 210. Furthermore, the actor attribution LLM 150 may generate sentence or document embeddings 224 by aggregating the embeddings of individual words. This allows for understanding the overall meaning and semantic compositionality of longer text units of the prompt 210.

In some embodiments, an analyst may utilize the embedding 224 to search for previous cases 240 that are similar to the current one in an indexed database 230 (e.g., previous cases 240 that are most similar to past indexed activities). The indexed database 230 may include the one or more sources of data 102, 104, 106 described herein and/or with respect to FIG. 1. In some embodiments, an embedding 224 may have been generated for each of these pieces of the one or more sources of data 102, 104, 106. In response to the prompt 210, the embedding 224 related to the prompt 210 may be generated. The actor attribution LLM 150 may be configured to identify nearest neighbors to the embedding 224 that are within the indexed database 230. For example, the embedding 224 may be compared to the embeddings of the one or more sources of data 102, 104, 106 within the indexed database 230 to determine which of the embeddings associated with the one or more sources of data 102, 104, 106 are nearest to the embedding 224 related to the prompt 210. As each of the embeddings may be represented as vectors in a multi-dimensional space, nearness may be calculated based on the coordinates of the vectors. The set of nearest neighbors may be returned to the prompt 210 as the previous cases 240.

An analyst may use these previous cases 240 for crafting their own conclusions on the data they have at their disposal. Such an approach might also be useful for linking together two or more different attackers as the same one. This could also help analysts spot that attackers have evolved their capabilities compared to previous similar attacks.

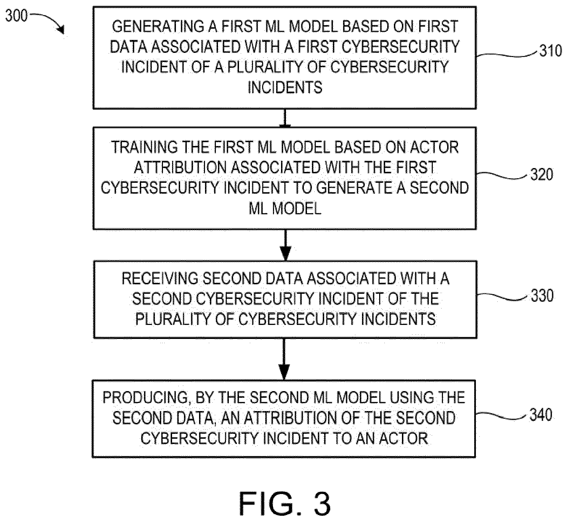

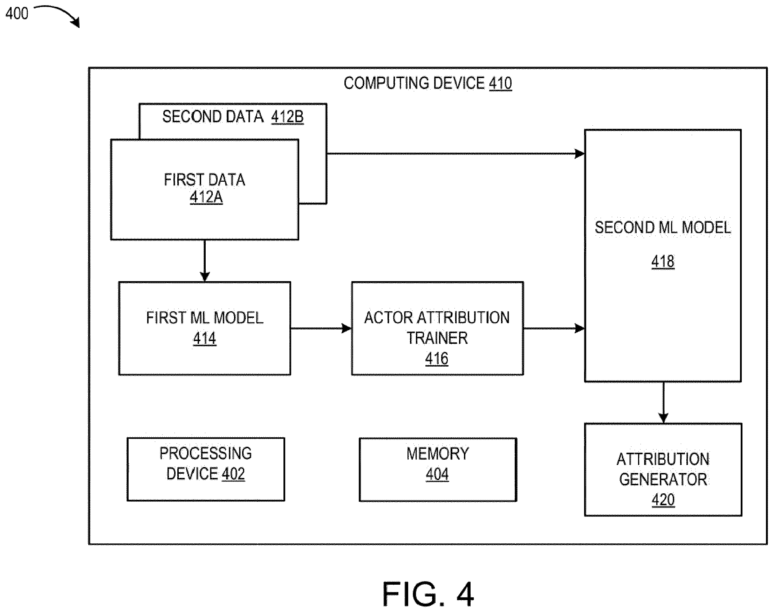

FIG. 3 is a flow diagram of a method 300 for actor attribution utilizing an LLM, in accordance with some embodiments of the present disclosure. A description of elements of FIG. 3 that have been previously described will be omitted for brevity. Method 300 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 300 may be performed by processing device 402 shown in FIG. 4.

With reference to FIG. 3, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 have to be performed.

With reference to FIG. 3, method 300 begins at block 310, whereupon processing logic is generating a first ML model, such as an LLM, based on first data associated with a first cyber security incident of a plurality of cybersecurity incidents. In some embodiments, the first ML model may be similar to the cybersecurity LLM 120 described herein with respect to FIGS. 1 and 2. In some embodiments, the first data may be similar to the one or more sources of data 102, 104, 106 described herein with respect to FIGS. 1 and 2.

At block 320, the processing logic is training the first ML model based on actor attribution associated with the first cybersecurity incident to generate a second ML model. In some embodiments, the second ML model may be similar to the actor attribution LLM 150 described herein with respect to FIGS. 1 and 2. In some embodiments, the actor attribution may be similar to the actor attribution ground truth labels 130 described herein with respect to FIG. 1. In some embodiments, the second ML model may be further trained utilizing reasoning data 140, such as the step-by-step demonstrations of the reasoning processing associated with cybersecurity incidents described herein with respect to FIG. 1.

At block 330, the processing logic receiving second data associated with a second cybersecurity incident of the plurality of cybersecurity incidents. In some embodiments, the second data may be similar to the prompt 210, described herein with respect to FIG. 2.

At block 340, the processing logic may produce, by the second ML model using the second data, an attribution of the second cybersecurity incident to an actor. In some embodiments, the attribution may be similar to the prediction 222, described herein with respect to FIG. 2. In some embodiments, the second ML model may further produce text analyzing the second data, such as the generated text 220 described herein with respect to FIG. 2, which may provide hypotheses related to the second cybersecurity incident, a validation of reasoning steps identified in the prompt 210 related to the second cybersecurity incident, suggestions for additional queries that may enhance discovery related to the second cybersecurity incident, and/or the like. In some embodiments, the second ML model may further produce indications of prior similar incidents, such as the previous cases 240 described herein with respect to FIG. 2. The prior similar incidents may be generated in response to an embedding generated from the second data, such as the embedding 224 described herein with respect to FIG. 2.

FIG. 4 is a component diagram of an example of a device architecture 400 for outputting an actor attribution, in accordance with embodiments of the disclosure. The device architecture 400 includes a computing device 410 having a processing device 402 and memory 404, which may implement the aspects described herein with respect to FIGS. 1 to 3.

Referring to FIG. 4, the computing device 410 may generate a first ML model 414 based on first data 412A associated with a first cyber security incident of a plurality of cybersecurity incidents. In some embodiments, the first ML model 414 may be similar to the cybersecurity LLM 120 described herein with respect to FIGS. 1 and 2. In some embodiments, the first data 412A may be similar to the one or more sources of data 102, 104, 106 described herein with respect to FIGS. 1 and 2.

The computing device 410 may train the first ML model 414 based on an actor attribution trainer 416 associated with the first cybersecurity incident to generate a second ML model 418. In some embodiments, the second ML model 418 may be similar to the actor attribution LLM 150 described herein with respect to FIGS. 1 and 2. In some embodiments, the actor attribution trainer 416 may be similar to the actor attribution ground truth labels 130 described herein with respect to FIG. 1. In some embodiments, the second ML model 418 may be further trained utilizing reasoning data 140, such as the step-by-step demonstrations of the reasoning processing associated with cybersecurity incidents described herein with respect to FIG. 1.

The computing device 410 may receive second data 412B associated with a second cybersecurity incident of the plurality of cybersecurity incidents. In some embodiments, the second data 412B may be similar to the prompt 210, described herein with respect to FIG. 2.

The computing device 410 may produce, from an attribution generator 420 via the second ML model 418 and using the second data 412B, an attribution of the second cybersecurity incident to an actor. In some embodiments, the attribution generator 420 may be produce the prediction 222, described herein with respect to FIG. 2. In some embodiments, the attribution generator 420 may further produce text analyzing the second data 412B, such as the generated text 220 described herein with respect to FIG. 2, which may provide hypotheses related to the second cybersecurity incident, a validation of reasoning steps identified in the prompt 210 related to the second cybersecurity incident, suggestions for additional queries that may enhance discovery related to the second cybersecurity incident, and/or the like. In some embodiments, the attribution generator 420 may further produce indications of prior similar incidents, such as the previous cases 240 described herein with respect to FIG. 2. The attribution generator 420 may generate the prior similar incidents in response to an embedding generated from the second data 412B, such as the embedding 224 described herein with respect to FIG. 2.

The device architecture 400 of FIG. 4 improves the operation of the computer device 410 by increasing the speed at which cybersecurity events are analyzed, while using a reduced amount of resources. In addition, the device architecture 400 provides an improvement to the technological field of cybersecurity analysis by allowing for investigation validation utilizing trained ML models 414, 418 (e.g., LLMs). In some embodiments, a trained model/second ML model 418 may be prompted for analyzing a cybersecurity event, and the trained model/second ML model 418 may provide verification of the current analysis and/or suggest additional analysis that may be helpful in identifying a particular actor and/or attacker via the attribution generator 420.

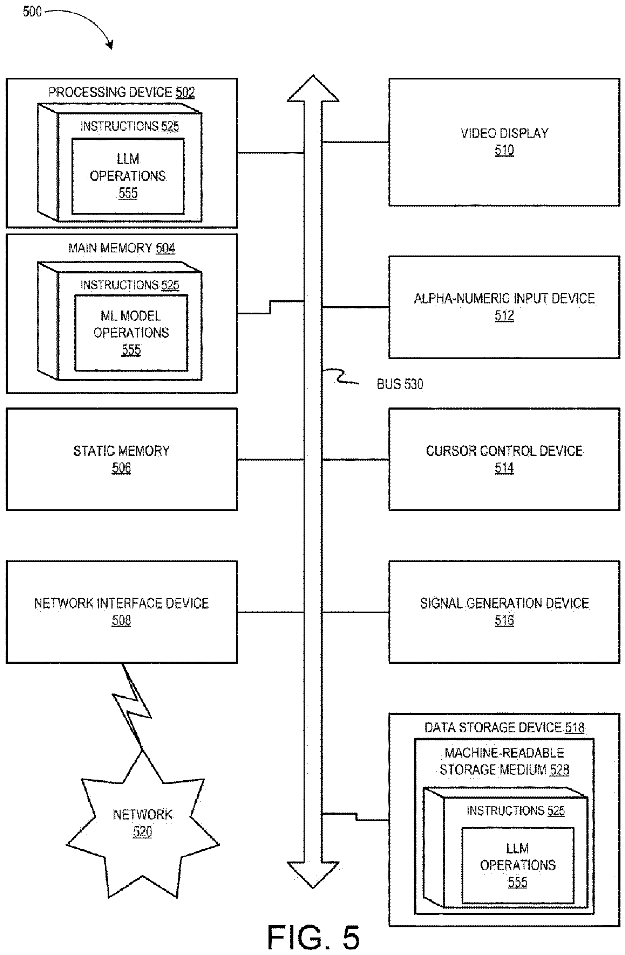

FIG. 5 is a block diagram of an example computing device 500 that may perform one or more of the operations described herein, in accordance with some embodiments of the disclosure. Computing device 500 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 500 may include a processing device (e.g., a general purpose processor, a PLD, etc.) 502, a main memory 504 (e.g., synchronous dynamic random access memory (DRAM), read-only memory (ROM)), a static memory 506 (e.g., flash memory) and a data storage device 518, which may communicate with each other via a bus 530.

Processing device 502 may be provided by one or more general-purpose processing devices such as a microprocessor, central processing unit, or the like. In an illustrative example, processing device 502 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 502 may also include one or more special-purpose processing devices such as an application specific integrated circuit (ASIC), a field programmable gate array (FPGA), a digital signal processor (DSP), network processor, or the like. The processing device 502 may execute the operations described herein, in accordance with one or more aspects of the present disclosure, for performing the operations and steps discussed herein.

Computing device 500 may further include a network interface device 508 which may communicate with a network 520. The computing device 500 also may include a video display unit 510 (e.g., a liquid crystal display (LCD) or a cathode ray tube (CRT)), an alphanumeric input device 512 (e.g., a keyboard), a cursor control device 514 (e.g., a mouse) and an acoustic signal generation device 516 (e.g., a speaker). In one embodiment, video display unit 510, alphanumeric input device 512, and cursor control device 514 may be combined into a single component or device (e.g., an LCD touch screen).

Data storage device 518 may include a computer-readable storage medium 528 on which may be stored one or more sets of instructions 525 that may include instructions for ML model operations 555 for carrying out the operations described herein, in accordance with one or more aspects of the present disclosure. Instructions 525 may also reside, completely or at least partially, within main memory 504 and/or within processing device 502 during execution thereof by computing device 500, main memory 504 and processing device 502 also constituting computer-readable media. The instructions 525 may further be transmitted or received over a network 520 via network interface device 508.

While computer-readable storage medium 528 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media and magnetic media.

Unless specifically stated otherwise, terms such as "generating," "training," "receiving," "producing," "identifying," "performing," "outputting," "storing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
generating a first machine learning, ML, model based on first data associated with a first cybersecurity incident of a plurality of cybersecurity incidents;
training the first ML model based on actor attribution associated with the first cybersecurity incident to generate a second ML model;
receiving second data associated with a second cybersecurity incident of the plurality of cybersecurity incidents; and
producing, by a processing device for the second ML model using the second data, an attribution of the second cybersecurity incident to an actor.

2. The method of claim 1, further comprising:
identifying the first cybersecurity incident associated with the first data from at least one of: a data archive, scaped content, or an external report.

3. The method of claim 1 or 2, wherein the training the first ML model based on the actor attribution, comprises:
performing a data reasoning procedure that indicates a process for associating the actor attribution with the first cybersecurity incident.

4. The method of any preceding claim, wherein the actor attribution corresponds to a ground truth label for a particular incident of the plurality of cybersecurity incidents, and wherein the actor for the particular incident is identifiable with a threshold level of confidence using the ground truth label.

5. The method of any preceding claim, wherein the second data associated with the second cybersecurity incident is a prompt related to the plurality of cybersecurity incidents, the second cybersecurity incident being validated based on the prompt.

6. The method of any preceding claim, wherein the producing the attribution of the second cybersecurity incident, comprises:
outputting, by the second ML model, at least one of a prediction, a textual analysis, or an embedding associated with the second data.

7. The method of claim 6, wherein the textual analysis comprises at least one of:
a hypothesis related to the second cybersecurity incident,
a validation of information associated with a prompt related to the second cybersecurity incident, or
a suggestion for an additional prompt related to discovery procedures associated with the second cybersecurity incident.

8. The method of any preceding claim, further comprising:
storing a record of prior cybersecurity incidents in an indexed database based on an embedding generated from the second data.

9. A system comprising:
a memory; and
a processing device, operatively coupled to the memory, and configured to carry out the method of any preceding claim.

10. A computer program including instructions that, when executed by a processing device, cause the processing device to carry out the method of any one of claims 1 to 8.
